# EUROPÄISCHE PATENTSCHRIFT

(11) **EP 2 862 787 B1**
(45) Veröffentlichungstag und Bekanntmachung des Hinweises auf die Patenterteilung: **21.06.2017**
(21) Anmeldenummer: 13405119.2
(22) Anmeldetag: 20.10.2013
(51) Int. Cl.: B62D 51/06, B62D 11/00

(54) **Selbstfahrende, vorzugsweise einachsige, motorisch angetriebene Arbeitsmaschine zum Fortbewegen und/oder Antreiben angebauter Arbeitsgeräte**
Self-propelled, preferably uniaxial, motorised work machine for moving and/or driving attached tools
Machine de travail automotrice, de préférence à un seul essieu, à entraînement motorisé, pour le déplacement et/ou l'entraînement d'appareils de travail montés

(43) Veröffentlichungstag der Anmeldung: 22.04.2015
(73) Patentinhaber: Rapid Technic AG, 8956 Killwangen (CH)
(72) Erfinder: Keller, Beat, 5620 Bremgarten (CH)
(74) Vertreter: Fenner, Werner

(56) Entgegenhaltungen:
- EP-A1- 2 583 541
- EP-A1- 2 607 209

## Beschreibung

Die Erfindung betrifft eine selbstfahrende, vorzugsweise einachsige, motorisch angetriebene Arbeitsmaschine zum Fortbewegen und/oder Antreiben an einer Anbauvorrichtung angebauter kommunaler oder landwirtschaftlicher Arbeitsgeräte, mit einem an einem Maschinen- resp. Fahrgestell befestigten Antriebsmotor und einer von diesem hydraulisch angetriebenen, beidseits des Maschinen- resp. Fahrgestells und quer zur Fortbewegungsrichtung abstehenden Fahrachse, die endseitig jeweils ein mit einer Antriebswelle verbundenes Rad aufweist, und bedienerseitig mit dem Maschinen- resp. Fahrgestell verbundenen Führungsholmen zur manuellen Lenkung der Arbeitsmaschine und zur Anordnung eines Betätigungsorgans, für das Betreiben und Steuern der den Rädern der Fahrachse jeweils zugeordneten, aus ansteuerbarer Hydraulikpumpe und Hydraulikmotor gebildeten Antriebseinheiten, **wobei die zur Steuerung mit dem Betätigungsorgan verbundene Hydraulikpumpe ein Stellorgan aufweist.**

Arbeitsmaschinen dieser Gattung sind beispielsweise in der vorveröffentlichten EP 2 583 541 A1 oder der EP 12 405 055.0 beschrieben. Diese Maschinen lassen sich von einer Vorwärts- in eine Rückwärtsbewegung schalten und weisen an den freien Enden der auslegerartigen Führungsholmen Bedienungshandgriffe auf. Zur Einstellung oder Verstellung der Fortbewegungsgeschwindigkeit der Arbeitsmaschine und/oder der Arbeitsgeschwindigkeit der Arbeitsgeräte ist ein auf den Antriebsmotor steuernd einwirkendes, manuell einstellbares Betätigungsorgan an einem Führungsholm befestigt. Hierzu wird beispielsweise ein Bedienungshandgriff resp. ein Drehgriff an dem freien Ende des einen Führungsholms verwendet, der durch einen doppelten Bowdenzug zur Steuerung der Antriebseinheiten mit diesen verbunden ist.

**Die** EP 2 607 209 A1 **beschreibt eine selbstfahrende, wenigstens einachsige Arbeitsmaschine zum Betreiben und/oder Fortbewegen von angebauten Arbeitsgeräten oder angehängten Fahrzeugen, die eine mit einem Verbrennunungsmotor angetriebene hydrostatische Antriebseinrichtung zur lenkbaren Fortbewegung durch mit den Antriebsrädern einer Fahrachse der Arbeitsmaschine verbundene Hydraulikmotoren aufweist.**

Die Lenkung solcher Arbeitsmaschinen mittels Führungsholmen erfordert insbesondere in unwegigem Gelände eine hohe manuelle Anstrengung der Bedienungsperson, wodurch die Fahr- und Arbeitsgenauigkeit sowie die Arbeitssicherheit für Personen und Maschine leidet resp. beeinträchtigt wird.

Aufgabe der vorliegenden Erfindung ist es deshalb, eine Arbeitsmaschine der eingangs beschriebenen Art zu schaffen, mit der das maschinelle Arbeiten mit höherer Sicherheit und Präzision erleichtert wird.

Erfindungsgemäss wird diese Aufgabe dadurch gelöst, dass das Verstellorgan mit einer an dem Maschinen- resp. Fahrgestell um eine etwa senkrecht zum Boden gerichtete Achse schwenkbar angeordneten Gestell gelagerten Steuerwelle verstell- und einstellbar gekoppelt ist. Damit werden die sich stellenden Anforderungen für eine Arbeitsmaschine und Mensch erfüllt.

Vorteilhaft ist das Verstellorgan jeweils durch ein Hebelgetriebe mit der Steuerwelle verbunden, sodass eine zuverlässige und exakte Pumpenverstellung erreichbar wird.

Um eine unmittelbare Wirkung durch eine Schwenkbewegung der Führungsholmen auf das Gestell ausüben zu können, sind die Führungsholmen vorzugsweise jeweils seitlich versetzt zur Schwenkachse an dem Gestell befestigt.

Im Sinne einer stabilen Anordnung und Zugänglichkeit ist das Gestell zweckmässig an der in Fortbewegungsrichtung der Arbeitsmaschine rückwärtigen Seite des Maschinen- resp. Fahrgestells resp. bedienungsseitig angeordnet.

Wesentlich für ein zuverlässiges Funktionieren der Arbeitsmaschine ist es, wenn das Gestell mittels versetzten elastischen, vornehmlich elastomeren Lagern -aus einem elastischen Werkstoff- an der Stirn- resp. Frontseite des Maschinen- resp. Fahrgestells abgestützt ist.

Es erweist sich als günstiges Befestigungs- und Ausführungskonzept, wenn die Lager an der Innenseite der Rückwand des durch ein C-Profil gebildeten Querschnitt des Gestells befestigt sind.

Vorzugsweise sind ein oberer und ein unterer Flansch des Gestells an dem Maschinen- resp. Fahrgestell im Abstand übereinander zur Bildung eines aus Einzellagern bestehenden, an einer etwa senkrechten Achse angeordneten Schwenklagers vorgesehen, das sich als ein einfaches Konstruktionsprinzip erweist.

Die das Betätigungsorgan der Pumpen der Antriebseinheiten bildenden Seilzüge sind vorteilhaft mit einem an der Steuerwelle befestigten Doppelhebel verbunden, der sich präzise in eine entsprechend gewählte Fortbewegungsrichtung der Arbeitsmaschine stellen resp. ansteuern lässt.

Zweckmässig und der einfachheithalber ist die Steuerwelle unterhalb des unteren Flansches des Gestells gelagert, wodurch die Einstellung oder Verstellung des Hebelgetriebes leicht zugänglich wird.

Eine einfache Betätigung der Hebelgetriebe und der Verstellorgane der Pumpen bietet sich dann dadurch an, wenn an der Steuerwelle jeweils ein jedem Hebelgetriebe zugeordneter Hebel- resp. Schwenkarm befestigt ist.

Im Sinne einer soliden Anordnung der Seilzüge, sind diese vorteilhaft an dem oberen Flansch des Gestells zu befestigen.

Zum Schutz und zur unmittelbaren Zuordnung der Seilzüge ist für einen der Seilzüge in dem unteren Flansch eine Ausnehmung vorgesehen, durch welche der betroffene Seilzug durchgeführt ist.

Zur leichteren Wahl der Fortbewegungsrichtung und für das zu bestimmende Ausmass der Lenkung der Arbeitsmaschine wird die Steuerwelle resp. das Heberlgetriebe und/oder das Verstellorgan vorzugsweise durch eine Federkraft in einer Ausgangsposition zur geraden Fahrt gehalten.

Zur Begrenzung der Schwenkpositionen des Gestells weist zweckmässig die Rückwand des Gestells quer zur Fortbewegungsrichtung sich erstreckende Schlitze resp. Durchtrittsöffnungen auf, die von an dem Maschine- resp. Fahrgestell befestigten, die Schwenkbewegung des Gestells bestimmenden Schwenkbegrenzer durchgesetzt werden.

Für eine optimierte Lenkung der Arbeitsmaschine beträgt das Verhältnis aus dem Abstand der Fahrachse von der Schwenkachse des Gestells und dem Abstand der Schwenkachse des Gestells von dem freien Ende der Führungsholme ≤ 2 :1 und wirkt sich als geringerer Kraftberdarf zur Bedienung der Arbeitsmaschine aus.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand eines Ausführungsbeispiels erläutert. In der Zeichnung zeigen:
- Fig. 1: eine räumliche Darstellung einer erfindungsgemässen Arbeitsmaschine,
- Fig. 2: eine Ansicht auf die von unten in Fig. 1 dargestellte Arbeitsmaschine,
- Fig. 3: einen Längsschnitt durch die Arbeitsmaschine nach der Linie III - III in Fig. 2,
- Fig. 4: eine auszugsweise räumliche Darstellung einer für die den Rädern der Fahrachse der Arbeitsmaschine zugeordnete Steuervorrichtung der Antriebseinheiten,
- Fig. 5: eine Ansicht der Steuervorrichtung von der Bedienungsseite der Arbeitsmaschine und
- Fig. 6: einen Schnitt nach der Linie VI - VI der in Fig. 5 dargestellten Steuervorrichtung.

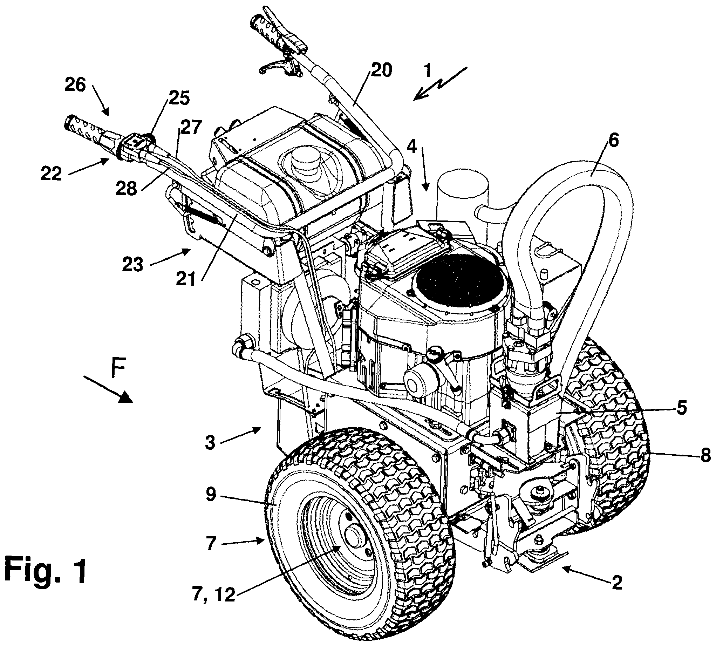

Fig. 1 zeigt eine selbstfahrende, von einer Person bedienbare, einachsige Arbeitsmaschine 1 zum gestossenen oder gezogenen Fortbewegen und/oder zum Antreiben von an einer frontseitig vorgesehenen Anbauvorrichtung 2 angebauten Anbaugeräten, wie beispielsweise Schneefräsen, Schneepflüge, Kehrbürsten oder Mähwerke etc., für den kommunalen und/oder landwirtschaftlichen Einsatz und Unterhalt.

Die Arbeitsmaschine 1 weist einen auf ein fahrbares Maschinen- resp. Fahrgestell 3 aufgebauten Antriebsmotor 4, vorzugsweise einen Verbrennungsmotor auf, der vorliegend eine stehende Antriebswelle aufweist, die über ein mechanisches Vorgelege (nicht ersichtlich) mit einer Hydraulikpumpe 5 für eine flexible Arbeitswelle 6 zur Koppelung mit angebauten Arbeitsgeräten verbunden ist (EP 13 405 102.8). Selbstverständlich kann ein Antriebsmotor mit liegender/horizontaler Antriebswelle und/oder mit einer mechanisch angetriebenen Zapfwelle für den Antrieb der Arbeitsgeräte resp. zum gleichen Zweck verwendet werden.
Die Arbeitsmaschine 1 ist üblicherweise mit einem reversierbaren Antriebsmotor ausgestattet, der eine zur Fortbewegungsrichtung F entgegengesetzte Fahrtrichtung erlaubt.
Eine Umkehr des Antriebs ist auch für den Betrieb der Antriebsgeräte vorgesehen.

Die Arbeitsmaschine 1 weist eine mit dem Maschinen- resp. Fahrgestell verbundene Fahrachse 7 auf, die quer zur Fortbewegungsrichtung F angeordnet ist und an den Enden zum fahrbaren Fortbewegen der Arbeitsmaschine 1 vorgesehene Räder 8, 9 aufweist, wobei die Fahrachse 7 aus zwei jeweils einem Rad 8, 9 zugeordnete, in von dem Maschinen- resp. Fahrgestell 3 seitlich abstehenden Achsstummeln 10, 11 gelagerten Antriebswellen 12, 13 gebildet ist, die jeweils einer hydraulischen, aus Hydraulikpumpe 14, 15 und Hydraulikmotor 16, 17 bestehenden Antriebseinheit 18, 19 zugeordnet ist, die mit dem Antriebsmotor 4 antriebsverbunden sind.

An dem Maschinen- resp. Fahrgestell 3 sind auf die Bedienungsseite resp. eine Stirnseite der Arbeitsmaschine sich erstreckend zwei seitlich beabstandete Führungsholmen 20, 21 zur manuellen Lenkung und Bedienung der Arbeitsmaschine 1 und/oder der Arbeitsgeräte durch eine Person befestigt, an deren Ende jeweils ein Bedienungshandgriff und Betätigungsorgane 22 für den Betrieb der Arbeitsmaschine 1 und/oder der Arbeitsgeräte befestigt sind.

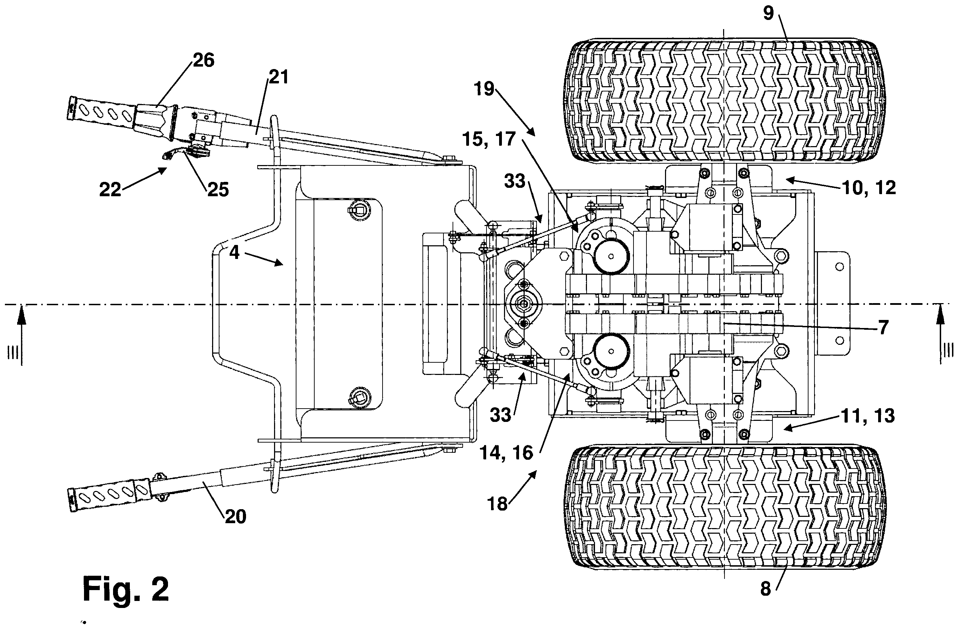

Weiterhin veranschaulichen die Fig. 1 bis 3 einen Betriebsstoff- resp. Brennstofftank 23, der zu dem Antriebsmotor 4 gehört.

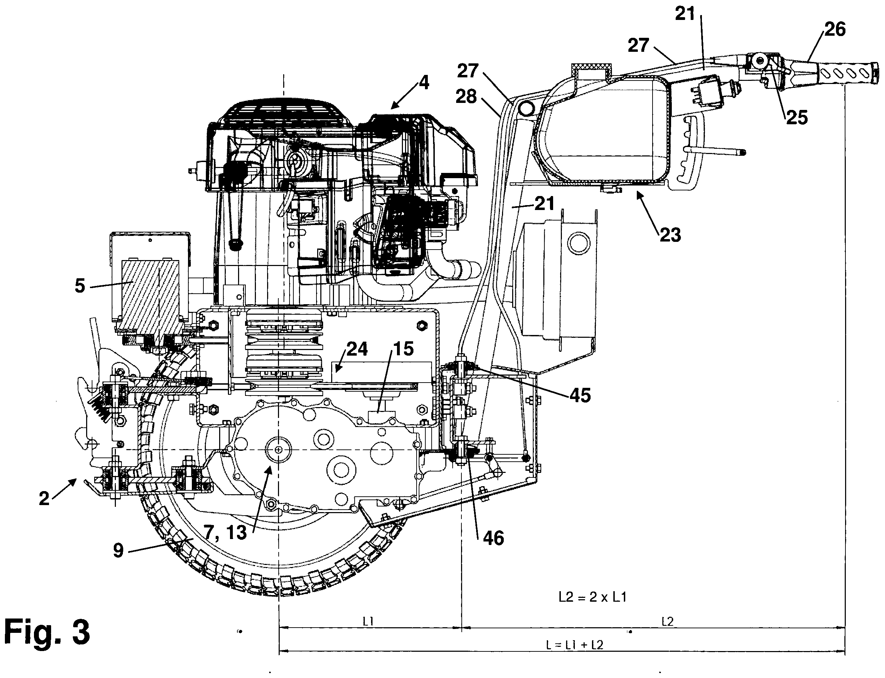

Fig. 3 zeigt ein als Riemen- oder Kettengetriebe ausgebildetes Zwischenvorgelege 24, das den Antriebsmotor 4 mit den Hydraulikpumpen 14, 15 der Antriebseinheiten 18, 19 verbindet.

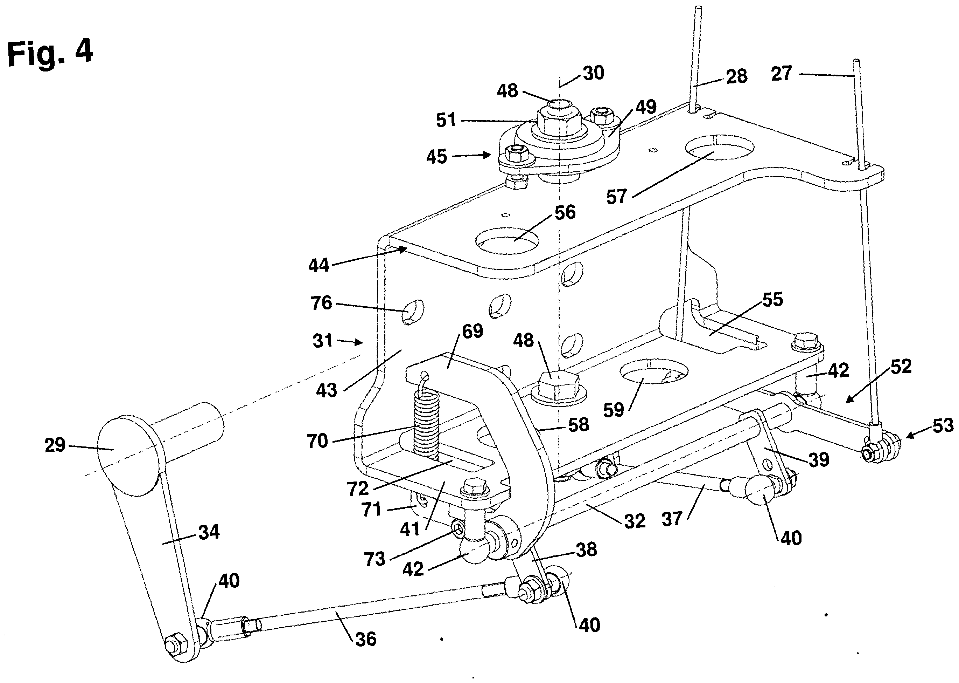

Als Betätigungsorgan 22 für das Betreiben und Steuern der den Rädern 8, 9 der Fahrachse 7 zugeordneten, ansteuerbaren Hydraulikpumpen 14, 15 und Hydraulikmotoren 16, 17 der Antriebseinheiten 18, 19 dient ein verstellbarer Gashebel 25, mit dem die Drehzahl des Antriebsmotors 4 eingestellt werden kann, und ein verdrehbarer Bedienungshandgriff 26, der die auf die Räder 8, 9 gleichmässig oder differenziert einwirkenden Antriebseinheiten 18, 19, insbesondere deren Hydraulikpumpen 14, 15 zur Lenkung der Arbeitsmaschine 1 resp. die Drehzahl der Räder 8, 9 steuert, in eine gerade oder eine davon abweichende Fortbewegungsrichtung. Es ist somit möglich, mit einem angetriebenen und einem stehenden Rad 8 bzw. 9 resp. einem druckbeaufschlagten und einem drucklosen Hydraulikmotor 16, 17 der Antriebseinheiten 18, 19 die Arbeitsmaschine um eine senkrechte Achse zu wenden. Der drehbare Bedienungshandgriff 26 ist vorliegend zu diesem Zweck mit einem Kegelradantrieb ausgebildet, der ein angetriebenes Kegelrad mit jeweils einem Seil- resp. Bowdenzug zur Einstellung oder Verstellung einer oder beider Antriebseinheiten 18, 19 bzw. einer Hydraulikpumpe 14, 15 verbindet. Hierzu weist die Hydraulikpumpe 14, 15 jeweils ein in Fig. 4 dargestelltes Verstellorgan 29 auf, das mit einer an dem Maschinen- resp. Fahrgestell 3 um eine etwa senkrecht zum befahrenen Boden gerichteten Achse 30 schwenkbar angeordneten Gestell 31 gelagerten Steuerwelle 32 verstell- und einstellbar gekuppelt resp. verbunden ist. Das Verstellorgan 29 einer Hydraulikpumpe 14, 15 ist durch ein Hebelgetriebe 33 mit der Steuerwelle 32 verbunden, wobei das Hebelgetriebe 33 ein an dem Verstellorgan 29 befestigten einarmigen Hebel 34 aufweist, der durch jeweils eine Stange 36, 37 mit einem an der Steuerwelle 32 befestigten Hebelarm 38, 39 verbunden ist. Als Verbindungselemente sind Kugelgelenke 40 vorgesehen und zur Änderung resp. Einstellung der Länge der Stangen 36, 37 sind die Kugelgelenke 40 und die Stangen 36, 37 an den Enden jeweils mit einem Rechts- und einem Linksgewinde ausgestattet.
Die Steuerwelle 32 ist unterhalb des unteren Flansches 41 des C-förmig ausgebildeten Gestells 31 gelagert, wozu an den freistehenden Ecken des unteren Flansches 41 mit diesem verschraubt Kugelgelenke resp. stehende Lager 42 verwendet worden sind.
Die Verschwenkbarkeit des Gestells 31 um die etwa mittig und näherungsweise entlang der Rückwand 43 des Gestells 31 angeordnete, den oberen 44 und unteren Flansch 41 durchsetzenden Schwenkachse 30 wird durch jeweils ein mit dem Maschinen- resp. Fahrgestell 3 verbundenes, aus zwei beabstandeten Einzellagern 45, 46 gebildetes Schwenklager 47 erreicht. Die Einzellager 45, 46 bestehen aus einer die Flanschen 41, 44 von innen nach aussen und jeweils eine Lagerplatte 49, 50 durchsetzenden Schraube 48, die an einer jeweils von dem Maschinen- resp. Fahrgestell 3 etwa horizontal abstehenden Platte 49, 50 befestigt sind. Eine Mutter mit Unterlagsscheibe 51 an den Schrauben 48 sichern die Einzellager 45, 46.

An einem Ende der Steuerwelle 32 ist ein Doppelhebel 52 befestigt, an dessen einen Hebelenden 53 jeweils ein in einer Ummantelung geführter Stahldraht oder ein Stahlseil der Seilzüge 27, 28 angehängt ist. Die Seilzüge 27, 28 sind u.a. oberhalb des Doppelhebels 52 im oberen Flansch 44 des Gestells 31 durch die Ummantelung festgehalten. Zur Durchführung des einen Seilzuges 28 durch den unteren Flansch 41 weist dieser eine Ausnehmung 55 auf.

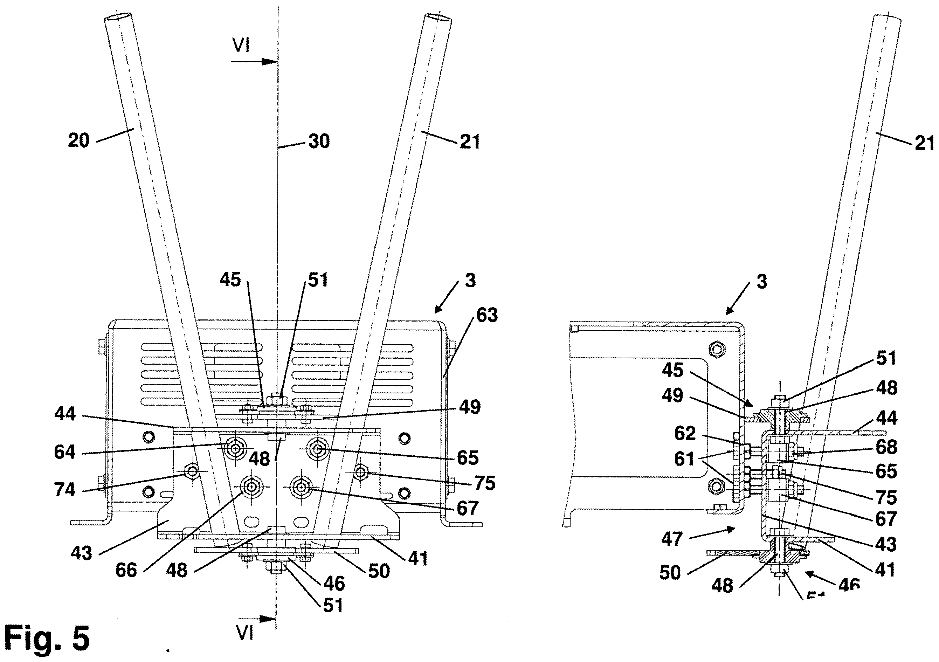

Die Führungsholme 20, 21 durchsetzen Öffnungen 56, 57 im oberen Flansch 44 des Gestells 31 und sind am unteren 41 wie am oberen Flansch 44 verschweisst (Fig. 5 und 6). Dabei sind die Führungsholme 20, 21 jeweils seitlich versetzt von der Schwenkachse 30 und im Abstand zur Rückwand 43 des Gestells 31 angeordnet.

Das Gestell 31 ist mit der Rückwand 43 an der in Fortbewegungsrichtung F der Arbeitsmaschine rückwärtigen Seite des Maschinen- resp. Fahrgestells 3 auf der Bedienerseite befestigt.
Die Befestigung des Gestells 31 ist in den Fig. 5 und 6 näher dargestellt. Hierbei weist die Rückwand 43 vier Bohrungen auf, durch welche jeweils eine Schraube 61 durchgesteckt und mittels Mutter 62 an einer Haube 63 resp. mit dem Maschinenresp. Fahrgestell 3 verbunden, befestigt ist. Der vorstehende Schaft der Schraube 61 durchsetzt die Rückwand 43 des Gestells 31 und ein auf den Schraubenschaft aufgesetztes elastisches Lager 64 bis 67 liegt an einer Mutter 68 einerseits und an der Innenseite der Rückwand 43 des Gestells 31 an.
Die vorgesehenen elastischen Lager 64 bis 67 bestehen aus einer relativ harten Gummimischung und werden u.a. auch als Dämpfungselemente abgestützter Maschinen und Einrichtungen verwendet. Man kennt sie auch als sog. Silentblocks, Gummilager oder Gummifederelemente und als wartungsfrei. Zum Schutz sind die Einspannenden der elastischen Lager mit Abdeckscheiben aus Stahl versehen.

Ersatzweise könnten auch Stahlfederpakete verwendet werden, die jedoch nicht die gleiche Dämpfungs- und Elastizitätswirkung wie die erwähnten elastomeren Lager vermitteln. Die Elastizität der Lager 64 bis 67 kann über die Ausmasse resp. die Höhe bzw. die Länge variiert werden.

Die Fig. 4 stellt die Steuerwelle 32 in einer Ausgangsposition für eine gerade Fortbewegungsrichtung der Arbeitsmaschine 1 dar, in der sie unter Federkraft stehend gehalten wird. Hierzu ist ein gekrümmter Hebel 69 einenends an der Steuerwelle 32 drehbar gelagert, der anderenends durch die Kraft einer Feder 70 an der Innenwand der Rückwand 43 des Gestells 31 anschlägt, wobei die als Zugfeder ausgebildete Feder 70 an dem gegenüberliegenden Ende eines an der Steuerwelle 32 befestigten Schwenkhebels 71 eingehängt ist. Die Anordnung dieser Rückstellvorrichtung befindet sich vorzugsweise auf der gegenüberliegenden Seite der Seilzüge 27, 28 an dem Gestell 31. Zur Durchführung der verbundenen Feder 70 ist eine weitere Ausnehmung 72 im unteren Flansch 41 des Gestells 31 vorgesehen. Ein Schraubenkopf 73 an dem Doppel-Schwenkhebel 38 stützt sich an dem als Anschlag dienenden, an der Unterseite des unteren Flansches 41 anstehenden gekrümmten Hebels 69 ab und nimmt Hebel 69 beim Schwenken der Welle 32 im Gegenuhrzeigersinn mit.

Die Fig. 5 und 6 zeigen weiterhin zwei Schwenkbegrenzer 74, 75 zur Begrenzung der seitlichen Schwenkbewegungen des Gestells 31. Hierzu sind beidseits der Schwenkachse 30 zwei horizontal verlaufende, etwa oval gebildete Durchtrittsöffnungen (nur 76 in Fig. 4 ersichtlich) vorgesehen, durch die jeweils eine an dem Maschinen- resp. Fahrgestell 3 befestigte Schraube ragt, die am freien Schaftende eine Mutter trägt und jeweils eine linke resp. rechte Schwenkbegrenzung für das schwenkbare Gestell 31 bildet.

Aufgrund der zur schonenden und feinfühligen Lenkung führenden, zusätzlich nachgeführten Lenkbewegungen über die Lager 64 bis 67 auf die Hebelgetriebe 33 entsteht bei einem Längenverhältnis zwischen dem Abstand der Fahrachse 7 zur Schwenkachse 30 des Gestells 31 einerseits gegenüber dem Abstand der Schwenkachse 30 zum freien Ende der Führungsholmen am Bedienungshandgriff 26 andererseits vorn ≤ 2:1 ein wesentlicher Vorteil, der sich auf die Bedienung der Arbeitsmaschine auswirkt, dargestellt in Fig. 3.

## Patentansprüche

1. Selbstfahrende, vorzugsweise einachsige, motorisch angetriebene Arbeitsmaschine (1) zum Fortbewegen und/oder Antreiben an einer Anbauvorrichtung (2) angebauter kommunaler oder landwirtschaftlicher Arbeitsgeräte, mit einem an einem Maschinen- resp. Fahrgestell (3) befestigten Antriebsmotor (4) und einer von diesem hydraulisch angetriebenen, beidseits des Maschinen- resp. Fahrgestell (3) und quer zur Fortbewegungsrichtung (F) abstehenden Fahrachse (7), die endseitig jeweils ein mit einer Antriebswelle (12, 13) verbundenes Rad (8, 9) aufweist, und bedienerseitig mit dem Maschinen- resp. Fahrgestell (3) verbundenen Führungsholmen (20, 21) zur manuellen Lenkung der Arbeitsmaschine (1) und zur Anordnung eines Betätigungsorgans (22), für das Betreiben und Steuern der den Rädern (8, 9) der Fahrachse (7) jeweils zugeordneten, aus ansteuerbarer Hydraulikpumpe (14, 15) und Hydraulikmotor (16, 17) gebildeten Antriebseinheiten (18, 19), **wobei die zur Steuerung mit dem Betätigungsorgan (22) verbundene Hydraulikpumpe (14, 15) ein Verstellorgan (29) aufweist, dadurch gekennzeichnet, dass** das Verstellorgan (29) mit einer an dem Maschinenresp. Fahrgestell (3) um eine etwa senkrecht zum Boden gerichtete Achse (30) schwenkbar angeordneten Gestell (31) gelagerten Steuerwelle (32) verstell- und einstellbar gekoppelt ist.

2. Maschine nach Anspruch 1, **dadurch gekennzeichnet, dass** das Verstellorgan (29) jeweils durch ein Hebelgetriebe (33) mit der Steuerwelle (32) verbunden ist.

3. Maschine nach Anspruch 1 oder 2, **dadurch gekennzeichnet, dass** die Führungsholmen (20, 21) jeweils seitlich versetzt zur Schwenkachse (30) an dem Gestell (31) befestigt sind.

4. Maschine nach Anspruch 3, **dadurch gekennzeichnet, dass** das Gestell (31) an der in Fortbewegungsrichtung (F) der Arbeitsmaschine (1) rückwärtigen Seite des Maschinen- resp. Fahrgestells (3) resp. bedienerseitig angeordnet ist.

5. Maschine nach einem der Ansprüche 1 bis 4, **dadurch gekennzeichnet, dass** das Gestell (31) mittels versetzten elastischen Lagern (64 bis 67) an einer Stirnseite des Maschinen- resp. Fahrgestells (3) abgestützt ist.

6. Maschine nach Anspruch 5, **dadurch gekennzeichnet, dass** die Lager (64 bis 67) an der Innenseite der Rückwand (43) des durch ein C-Profil gebildeten Querschnitts des Gestells (31) befestigt sind.

7. Maschine nach einem der Ansprüche 1 bis 6, **dadurch gekennzeichnet, dass** ein oberer und ein unterer Flansch (41, 44) des Gestells (31) in an dem Maschinen- resp. Fahrgestell (3) im Abstand übereinander befestigten, ein Schwenklager (47) bildenden Einzellagern (45, 46) um die etwa senkrechte Schwenkachse (30) gelagert sind.

8. Maschine nach einem der Ansprüche 1 bis 7, **dadurch gekennzeichnet, dass** das Betätigungsorgan (22) durch zwei Seilzüge (27, 28) ausgebildet ist, die mit einem an der Steuerwelle (32) befestigten Doppelhebel (52) verbunden sind.

9. Maschine nach einem der Ansprüche 7 oder 8, **dadurch gekennzeichnet, dass** die Steuerwelle (32) unterhalb des unteren Flansches (41) des Gestells (31) gelagert sind.

10. Maschine nach einem der Ansprüche 2 bis 9, **dadurch gekennzeichnet, dass** an der Steuerwelle (32) jeweils ein jedem Hebelgetriebe (33) zugeordneter Hebel- resp. Schwenkarm (38, 39) befestigt ist.

11. Maschine nach einem der Ansprüche 8 bis 10, **dadurch gekennzeichnet, dass** die Seilzüge (27, 28) in dem oberen Flansch (44) des Gestells (31) geführt sind.

12. Maschine nach Anspruch 11, **dadurch gekennzeichnet, dass** der untere Flansch (41) des Gestells (31) zur Durchführung eines Seilzuges (28) eine Ausnehmung (55) aufweist.

13. Maschine nach Anspruch 2, **dadurch gekennzeichnet, dass** die Steuerwelle (32) resp. das Hebelgetriebe (33) oder das Verstellorgan (29) mittels Federkraft in einer Ausgangsposition festgehalten ist.

14. Maschine nach Anspruch 6, **dadurch gekennzeichnet, dass** die Rückwand (43) des Gestells (31) quer zur Fortbewegungsrichtung (F) verlaufende Schlitze resp. Durchtrittsöffnungen (76) aufweist, welche von die Schwenkbewegung des Gestells (31) begrenzenden Schwenkbegrenzern (74, 75) durchsetzt werden.

15. Maschine nach Anspruch 1, **dadurch gekennzeichnet, dass** das Verhältnis zwischen dem Abstand der Fahrachse (7) von der Schwenkachse (30) des Gestells (31) und dem Abstand der Schwenkachse (30) des Gestells (31) von dem freien Ende der Führungsholmen (20, 21) ≤ 2 : 1 beträgt.

## Claims

1. Self-propelled, preferably single-axle, motor-driven working machine (1) for moving and/or driving municipal or agricultural implements mounted on a mounted device (2), comprising a drive motor (4) mounted on a machine frame or chassis (3) and an axle (7) driven hydraulically thereby, extending from either side of the machine frame or chassis (3) and transversely to the direction of movement (F), provided at either end with a wheel (8, 9) connected to a drive shaft (12, 13), and provided on the operator side with guide bars (20, 21) connected to the machine frame or chassis (3) for manual steering of the working machine (1) and for the arrangement of an actuating element (22) for operating and controlling the drive units (18, 19) formed of a controllable hydraulic pump (14, 15) and a hydraulic motor (16, 17) and each associated with the respective wheels (8, 9) of the axle (7), wherein the hydraulic pump (14, 15) connected to the actuating element (22) for control comprises a displacement element (29), **characterised in that** the displacement element (29) is displaceably and adjustably coupled to a control shaft (32) supported on the machine frame or chassis (3) on a frame (31) arranged to pivot about an axis (30) oriented substantially perpendicularly to the ground.

2. Machine according to claim 1, **characterised in that** the displacement element (29) is connected to the control shaft (32) by a lever mechanism (33).

3. Machine according to claim 1 or claim 2, **characterised in that** the guide bars (20, 21) are each mounted on the frame (31) in such a manner that they are laterally offset relative to the pivot axis (30).

4. Machine according to claim 3, **characterised in that** the frame (31) is arranged on the rear side of the machine frame or chassis (3) in the direction of movement (F) of the working machine (1) or on the operator side.

5. Machine according to one of claims 1 to 4, **characterised in that** the frame (31) is supported at an end face of the machine frame or chassis (3) by means of offset flexible bearings (64 to 67).

6. Machine according to claim 5, **characterised in that** the bearings (64 to 67) are mounted on the inner face of the rear wall (43) of the cross section of the frame (31) formed by a C-section.

7. Machine according to one of claims 1 to 6, **characterised in that** an upper flange and a lower flange (41, 44) of the frame (31) are supported in individual bearings (45, 46) mounted at a distance one above the other on the machine frame or chassis (3) so as to form a pivot bearing (47) in such a manner that said flanges can pivot about the substantially perpendicular pivot axis (30).

8. Machine according to one of claims 1 to 7, **characterised in that** the actuating element (22) is formed by two control cables (27, 28) connected to a double lever (52) mounted on the control shaft (32).

9. Machine according to either of claims 7 or 8, **characterised in that** the control shaft (32) is supported below the lower flange (41) of the frame (31).

10. Machine according to one of claims 2 to 9, **characterised in that** a respective lever or pivoted arm (38, 39) associated with each lever mechanism (33) is mounted on the control shaft (32).

11. Machine according to one of claims 8 to 10, **characterised in that** the control cables (27, 28) are guided in the upper flange (44) of the frame (31).

12. Machine according to claim 11, **characterised in that** the lower flange (41) of the frame (31) has a recess (55) for the passage of a control cable (28).

13. Machine according to claim 2, **characterised in that** the control shaft (32) or the lever mechanism (33) or the displacement element (29) is held in a starting position by means of spring force.

14. Machine according to claim 6, **characterised in that** the rear wall (43) of the frame (31) has slits or through openings (76) extending transversely to the direction of movement (F) and traversed by pivot limiters (74, 75) limiting the pivoting movement of the frame (31).

15. Machine according to claim 1, **characterised in that** the ratio between the distance of the axle (7) from the pivot axis (30) of the frame (31) and the distance of the pivot axis (30) of the frame (31) from the free end of the guide bars (20, 21) is ≤ 2 : 1.

## Revendications

1. Machine de travail automotrice (1), de préférence à un seul essieu, à entraînement motorisé pour le déplacement et/ou l'entraînement d'appareils de travail municipaux ou agricoles montés sur un dispositif de montage (2), avec un moteur d'entraînement (4) fixé à un châssis de la machine ou à un bogie (3) et un essieu (7) entraîné hydrauliquement par celui-ci et sortant de part et d'autre du châssis de la machine ou du bogie (3) transversalement à la direction de déplacement (F), qui présente en extrémité chaque fois une roue (8, 9) reliée à un arbre d'entraînement (12, 13), et des bras de guidage (20, 21) reliés côté utilisateur au châssis de la machine ou au bogie (3) pour la direction manuelle de la machine de travail (1) et pour l'agencement d'un organe d'actionnement (22), pour la conduite et la commande des unités d'entraînement (18, 19) respectivement associées aux roues (8, 9) de l'essieu (7) et formées par une pompe hydraulique pouvant être commandée (14, 15) et un moteur hydraulique (16, 17), dans laquelle la pompe hydraulique (14, 15) reliée pour la commande à l'organe d'actionnement (18, 19) présente un organe de réglage (29), **caractérisée en ce que** l'organe de réglage (29) est couplé de façon ajustable et réglable à un arbre de commande (32) monté sur un châssis (31) disposé sur le châssis de la machine respectivement le bogie (3) de façon pivotante autour d'un axe (30) orienté perpendiculairement au sol.

2. Machine selon la revendication 1, **caractérisée en ce que** l'organe de réglage (29) est relié à l'arbre de commande (32) respectivement par une transmission à leviers (33).

3. Machine selon la revendication 1 ou 2, **caractérisée en ce que** les bras de guidage (20, 21) sont fixés au châssis (31) respectivement en décalage latéral par rapport à l'axe de pivotement (30).

4. Machine selon la revendication 3, **caractérisée en ce que** le châssis (31) est disposé sur le côté arrière du châssis de la machine ou du bogie (3) dans la direction de déplacement (F) de la machine de travail (1), respectivement du côté utilisateur.

5. Machine selon l'une quelconque des revendications 1 à 4, **caractérisée en ce que** le châssis (31) est supporté au moyen d'appuis élastiques décalés (64 à 67) sur un côté frontal du châssis de la machine ou du bogie (3).

6. Machine selon la revendication 5, **caractérisée en ce que** les appuis (64 à 67) sont fixés sur le côté intérieur de la paroi arrière (43) de la section transversale du châssis (31) formée par un profilé C.

7. Machine selon l'une quelconque des revendications 1 à 6, **caractérisée en ce qu'**une aile supérieure et une aile inférieure (41, 44) du châssis (31) sont montées dans des appuis individuels (45, 46) fixés à distance l'un au-dessus de l'autre sur le châssis de la machine ou le bogie (3) et formant un palier pivotant (47) autour d'un axe de pivotement sensiblement vertical (30).

8. Machine selon l'une quelconque des revendications 1 à 7, **caractérisée en ce que** l'organe d'actionnement (22) est formé par deux câbles Bowden (27, 28), qui sont reliés à un double levier (52) fixé à l'arbre de commande (32).

9. Machine selon une des revendications 7 ou 8, **caractérisée en ce que** l'arbre de commande (32) est supporté en dessous de l'aile inférieure (41) du châssis (31).

10. Machine selon l'une quelconque des revendications 2 à 9, **caractérisée en ce qu'**un bras de levier respectivement un bras pivotant (38, 39) respectivement associé à chaque transmission à leviers (33) est fixé à l'arbre de commande (32).

11. Machine selon l'une quelconque des revendications 8 à 10, **caractérisée en ce que** les câbles Bowden (27, 28) sont guidés dans l'aile supérieure (44) du châssis (31).

12. Machine selon la revendication 11, **caractérisée en ce que** l'aile inférieure (41) du châssis (31) présente un évidement (55) pour le passage d'un câble Bowden (28).

13. Machine selon la revendication 2, **caractérisée en ce que** l'arbre de commande (32) respectivement la transmission à leviers (33) ou l'organe de réglage (29) est maintenu(e) dans une position initiale au moyen d'une force de ressort.

14. Machine selon la revendication 6, **caractérisée en ce que** la paroi arrière (43) du châssis (31) présente des fentes respectivement des ouvertures de passage (76) s'étendant transversalement à la direction de déplacement (F), qui sont traversées par des limiteurs de pivotement (74, 75) limitant le mouvement de pivotement du châssis (31).

15. Machine selon la revendication 1, **caractérisée en ce que** le rapport entre la distance de l'essieu (7) à l'axe de pivotement (30) du châssis (31) et la distance de l'axe de pivotement (30) du châssis (31) à l'extrémité libre des bras de guidage (20, 21) vaut ≤ 2:1.
